# FASCICULE DE BREVET EUROPEEN

(11) **EP 2 870 010 B1**
(45) Date de publication et mention de la délivrance du brevet: **03.06.2020**
(21) Numéro de dépôt: 13723889.5
(22) Date de dépôt: 26.04.2013
(51) Int. Cl.: B60H 1/00, B60R 7/04, B60N 2/75

(54) **VÉHICULE AUTOMOBILE À CONSOLE CENTRALE COMPRENANT UNE STRUCTURE DE SUPPORT ET UN SYSTÈME DE CLIMATISATION**
KRAFTFAHRZEUG MIT MITTELKONSOLE MIT EINER STÜTZSTRUKTUR UND EINEM KLIMAANLAGENSYSTEM
MOTOR VEHICLE WITH CENTRAL CONSOLE COMPRISING A SUPPORT STRUCTURE AND AN AIR CONDITIONING SYSTEM

(30) Priorité: 04.07.2012 FR 1256412
(43) Date de publication de la demande: 13.05.2015
(73) Titulaire: Renault S.A.S., 92100 Boulogne-Billancourt (FR)
(72) Inventeur: COTMAN, Radu Lorin, Bucarest (RO)
(86) Numéro de dépôt international: PCT/FR2013/050940
(87) Numéro de publication internationale: WO 2014/006285

(56) Documents cités:
- CN-U- 201 520 186
- GB-A- 2 338 459
- JP-A- 2012 020 614
- US-A1- 2007 138 819
- US-B1- 7 029 048

## Description

La présente invention concerne les véhicules automobiles, plus particulièrement ceux qui sont équipés d'une console centrale disposée entre les sièges d'une rangée de sièges et équipée d'un système de climatisation.

Les demandes de brevet US 2008/0245501 et US 2010/0248604 décrivent des systèmes de climatisation en console centrale pour véhicule automobile, montés entre les sièges avant des véhicules, dans lesquels un carter, directement fixé au plancher du véhicule, contient et supporte un système de ventilation, un évaporateur et un radiateur de chauffage. Le carter est muni d'une bouche d'air orientée vers l'arrière et de conduits transversaux reliés à des montants latéraux du véhicule pour former des bouches d'air de désembuage des vitres latérales arrière du véhicule.

Le document CN 201 520 186 divulgue une console centrale comprenant un boîtier contenant un système de climatisation.

Le document US 2007/0138819 divulgue une console centrale comprenant une pluralité de montants formés de profilés tubulaires.

De tels systèmes de climatisation présentent les inconvénients suivants. Le carter doit présenter les caractéristiques de résistance mécanique nécessaires pour assurer la sécurité. Il est encombrant dans le sens longitudinal du véhicule et en hauteur. Il n'est en conséquence pas du tout adapté pour loger les accroches des ceintures de sécurité et avoir accès à ces accroches. Il n'est pas non plus adapté pour supporter un accoudoir central.

La présente invention vise à éviter et pour le moins à réduire les inconvénients ci-dessus.

Selon un mode de réalisation, la présente invention a pour objet un véhicule automobile selon la revendication 1 qui comprend au moins deux rangées de sièges et une console centrale située entre deux sièges de la première rangée de sièges en avant de la deuxième rangée de sièges, ladite console centrale comprenant un boîtier contenant un système de climatisation capable de souffler de l'air vers l'arrière.

Selon l'invention, la console comprend une structure de support qui comprend une embase de fixation fixée au plancher du véhicule, un support supérieur situé plus haut que l'embase de fixation, une pluralité de montants reliant l'embase et le support supérieur et des moyens de maintien dudit boîtier, ladite structure de support délimitant un espace de réception au moins partielle dudit boîtier.

De cette manière, la console peut être résistante et compacte.

Lesdits montants peuvent s'étendent de façon adjacente à la périphérie dudit boîtier.

La structure de support peut comprendre quatre montants situés, au moins en partie, sensiblement de façon adjacente à des coins dudit boîtier.

La structure de support peut comprendre des pièces de renforcement reliant lesdits montants, au moins deux à deux.

La structure de support peut comprendre des pattes de fixation dudit boîtier.

La console peut comprendre un carénage dans lequel s'étendent au moins en partie ladite structure de support et ledit boîtier.

L'embase de fixation peut présenter un passage traversé par un appendice inférieur dudit boîtier.

L'embase de fixation et le support supérieur comprennent des plaques et les montants comprennent des profilés tubulaires.

La console peut porter un accoudoir monté sur ledit support supérieur.

Ledit accoudoir peut être monté sur le support supérieur par l'intermédiaire de moyens d'articulation présentant des butées de fin de course.

Le boîtier peut contenir un système de ventilation et un échangeur de chaleur, disposés sensiblement verticalement l'un au-dessus de l'autre.

Un véhicule automobile équipé d'une console centrale va maintenant être décrit à titre d'exemple non limitatif, illustré par le dessin sur lequel :
- la figure 1 représente une vue schématique en perspective d'un véhicule automobile selon l'invention ;
- la figure 2 représente une vue en perspective d'une structure de support de ladite console selon l'invention ;
- la figure 3 représente une vue en perspective la structure de support de la figure 2 à laquelle est adjoint un système de climatisation de ladite console selon l'invention ; et
- la figure 4 représente un vue schématique du système de climatisation de la figure 3.

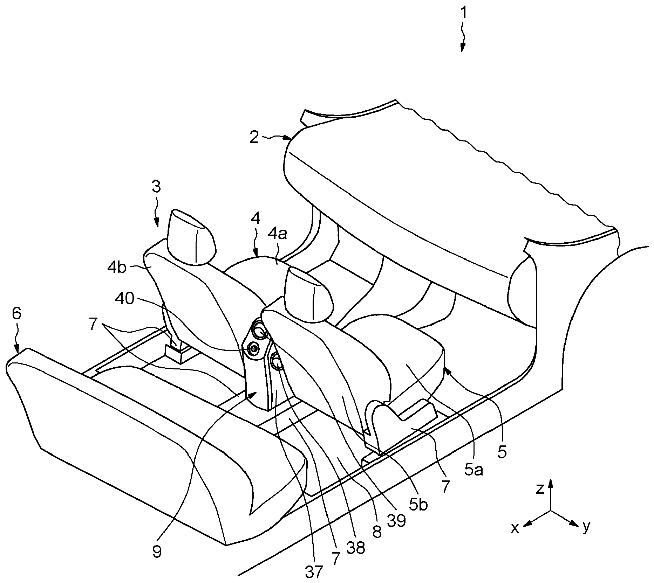

Dans la suite de la description, les termes "longitudinal", "transversal", "vertical", "avant", "arrière", "gauche" et "droite" sont définis d'après le repère orthogonal habituel des véhicules à moteur, illustré sur la figure 1, et comprenant :
- un axe longitudinal X, horizontal et orienté de l'avant vers l'arrière du véhicule ;
- un axe transversal Y, horizontal, perpendiculaire à l'axe longitudinal X et orienté de gauche à droite du véhicule se déplaçant vers l'avant ;
- un axe vertical Z, orthogonal aux axes longitudinal et transversal X, Y.

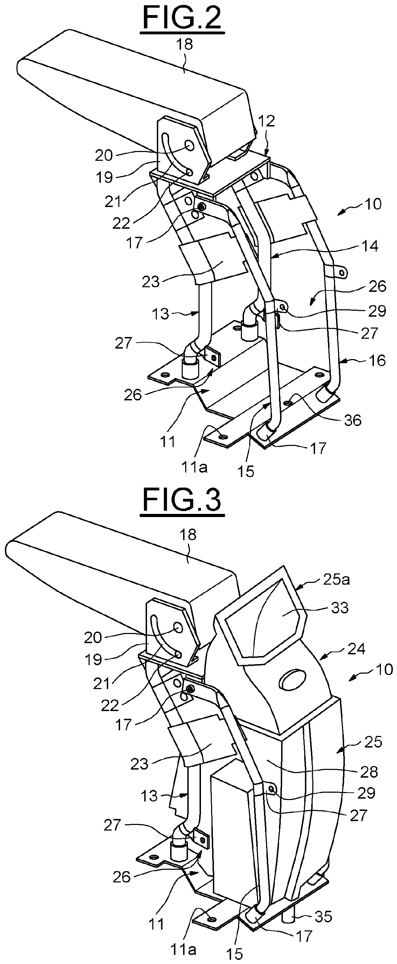

Considérant d'abord les figures 1 et 2, qui illustrent une partie d'un habitacle d'un véhicule automobile 1, tel qu'un véhicule à moteur électrique, selon l'invention. Le véhicule 1 comporte un tableau de bord 2, une première rangée de sièges 3 située dans l'habitacle et comprenant deux sièges, par exemple un siège 4 de conducteur et un siège 5 de passager, et une deuxième rangée de sièges 6 située derrière la première rangée de sièges. Chaque siège 4, 5 de la première rangée de sièges 3 est monté sur une structure de guidage 7 dont une partie fixe est fixée au plancher 8 de l'habitacle du véhicule 1, incluant éventuellement un tunnel s'étendant longitudinalement dans la partie centrale de cet habitacle. Chaque siège 4, 5 peut coulisser suivant l'axe longitudinal X afin de régler la position longitudinale de chaque siège avant 4, 5. La structure de guidage 7 peut, par exemple, consister en des rails situés de part et d'autre de chaque siège 4, 5 ou en n'importe quels autres éléments servant de structure de guidage. Chaque siège 4, 5 comprend une assise 4a, 5a et un dossier 4b, 5b s'étendant verticalement depuis l'assise 4a, 5a suivant l'axe vertical Z.

Comme illustrée, la deuxième rangée de sièges 6 comprend par exemple une banquette. Selon une variante, la deuxième rangée de sièges peut comprendre deux ou trois sièges individuels (non représentés). Selon une autre variante, le véhicule automobile 1 peut comporter trois rangées de sièges.

Le véhicule 1 comprend en outre d'une console centrale 9 située entre les deux sièges avant 4, 5 de la première rangée de sièges 3 en avant de la deuxième rangée de sièges 6. Par exemple, la console centrale 8 possède une largeur inférieure ou égale à la largeur du dossier 4b, 5b de la première rangée de sièges 3 afin de laisser suffisamment de place pour les jambes des passagers assis à l'arrière. Ladite largeur est mesurée selon l'axe longitudinal X et correspond à l'épaisseur du dossier 4b. Lorsque l'un des sièges 4 de la première rangée de sièges 3 atteint une butée (non représentée) de la structure de guidage 7, la console centrale 8 ne s'étend pas, de préférence, au-delà du dossier 4b du siège 4.

Comme illustré sur la figure 2, la console centrale 9 comprend une structure de support 10, rigide, qui comprend une embase de fixation 11 fixée au plancher 8 du véhicule 1 ou à son tunnel précité, un support supérieur 12 situé plus haut que l'embase de fixation 11 et une pluralité de montants, plus particulièrement quatre montants 13, 14, 15 et 16, formés par des profilés tubulaires, reliant l'embase de fixation 11 et le support supérieur 12.

Selon l'exemple représenté, l'embase de fixation 11 est formée par une plaque substantiellement rectangulaire, cette plaque et le plancher 8 ou son tunnel étant adapté l'un à l'autre. L'embase de fixation 11 présente des trous traversants 11a pour le passage de vis de fixation (non représentées).

Selon l'exemple représenté, le support supérieur 12 est formé par une plaque plate rectangulaire disposée horizontalement, dont la longueur et la largeur sont plus petites que la longueur et la largeur de l'embase de fixation 11.

Selon l'exemple représenté, le support supérieur 12 est décalé vers l'avant du véhicule de façon à être au-dessus du bord avant transversal de l'embase de fixation 11.

Selon l'exemple représenté, les deux montants 13 et 14, placés à l'avant et espacés transversalement, relient les coins avant gauche et droit de l'embase de fixation 11 et du support supérieur 12 et les deux montants 15 et 16, placés à l'arrière et espacés transversalement, relient les coins avant gauche et droit de l'embase de fixation 11 et du support supérieur 12.

Selon l'exemple représenté, les extrémités inférieures des montants 13, 14, 15 et 16 sont fixées sur le dessus de l'embase de fixation 11 et leurs extrémités supérieures sont fixées sur le dessous du support supérieur 12, par l'intermédiaire de moyens de fixation 17 tels que des soudures, des pattes ou des douilles soudées et des vis ou boulons de fixation.

Les montants 13, 14, 15 et 16 peuvent présenter des parties inférieures sensiblement verticales et des parties supérieures arquées vers l'avant, par exemple sous la forme de portions coudées entre elles.

Le support supérieur 12 porte, sensiblement sur ses bords longitudinaux, des plaques longitudinales 19 qui s'étendent vers le haut, entre lesquelles la partie arrière d'un accoudoir 18 est introduite. Cet accoudoir 18 est articulé sur les plaques longitudinales 19 par l'intermédiaire d'axes transversaux 20. Les plaques longitudinales 19 présentent des lumières 21 en forme d'arcs de cercles centrés que les axes transversaux 20 et la partie arrière de l'accoudoir 18 est munie de doigts 22 engagés dans ces lumières 21, de telle sorte que l'accoudoir 18 peut être pivoté entre une position relevée dans laquelle il s'étend sensiblement vers le haut, entre les dossiers 4b et 5b des sièges avant 4 et 5, et une position abaissée sensiblement horizontalement, vers l'avant au-delà des dossiers 4b et 5b, dans laquelle il peut être utilisé par les occupants des sièges avant. Les extrémités des lumières 21 forment des butées de fin de course.

La structure de support 10 comprend en outre des pièces de renforcement 23 qui, par exemple sont formées par des plaques qui relient respectivement les montants 13 et 15 et les montants 14 et 16.

Ainsi constituée, la structure de support 10 présente une forme générale allongée vers la haut et est symétrique par rapport à un plan médian vertical s'étendant longitudinalement au véhicule 1.

Comme illustré sur la figure 3, la console centrale 9 comprend en outre un système compact de climatisation 24 qui comprend un boîtier 25, par exemple en une matière plastique, qui est de forme générale allongée vers la haut et qui est, dans sa majeure partie, inséré à l'intérieur de l'espace de réception 26 déterminé entre les montants 13, 14, 15 et 16 et au-dessus de l'embase de fixation 11. Le boîtier 25 présente une partie supérieure 25a qui dépasse de l'espace de réception 26 et qui s'étend juste en arrière du support supérieur 12 et de la partie arrière de l'accoudoir 18.

Les montants 13, 14, 15 et 16 de la structure de support 10 sont situés, au moins en partie, sensiblement de façon adjacente à la périphérie et plus particulièrement à des coins du boîtier 25 et sont équipés d'une pluralité de pattes de maintien 27 placées contre des flancs latéraux 28 du boîtier 25 et reliées à ces derniers par exemple par des vis 29.

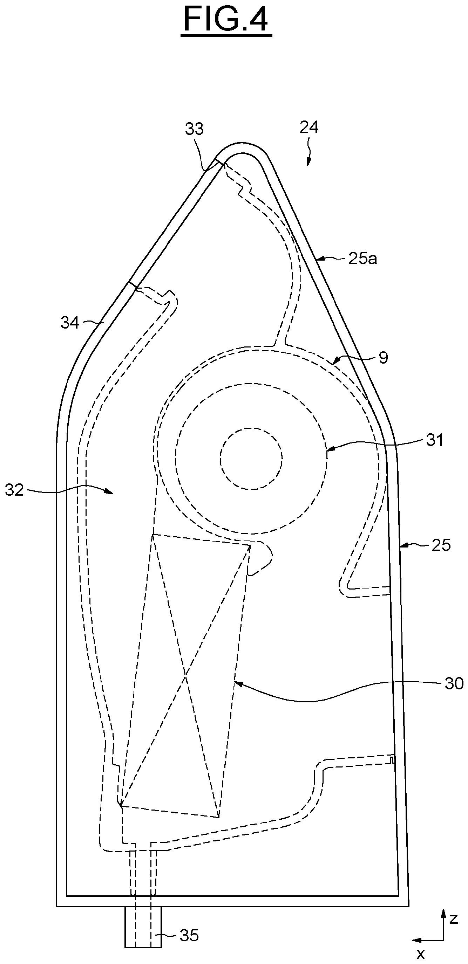

Comme illustré schématiquement sur la figure 4, le boîtier 25 contient un échangeur de chaleur 30, tel qu'un évaporateur connecté à des conduits de climatiseur (non représentés) arrivant dans la console 9, et un système de ventilation 31 placés sensiblement verticalement l'un au-dessus de l'autre, le système de ventilation 31 étant par exemple au-dessus de l'échangeur de chaleur 30.

A l'intérieur du boîtier 25 sont aménagés des passages d'air 32 pour faire circuler de l'air depuis une ouverture d'entrée d'air (non représentée) communiquant avec l'habitacle du véhicule par un côté du boîtier 25 et une ouverture de sortie d'air 33, par exemple multidirectionnelle, communiquant avec l'habitacle du véhicule au travers d'une paroi arrière 34 de la partie supérieure 25a du boîtier 25.

Le boîtier 25 présente un appendice inférieur 35 qui traverse un passage 36 de l'embase 11 et qui permet d'évacuer de l'eau de condensation vers l'extérieur du véhicule.

Comme illustré sur la figure 1, la console centrale 9 comprend en outre un carénage ou coque 37, par exemple en une matière plastique, dans lequel s'étendent la structure de support 10 et le boîtier 25. Le carénage 37 présente une bouche d'entrée d'air 38 adjacente à l'ouverture d'entrée d'air du boîtier 25 et une bouche de sortie d'air 39, par exemple multidirectionnelle, adjacente à l'ouverture de sortie d'air 33 du boîtier 25, dirigeant l'air vers l'arrière et éventuellement équipée de déflecteurs réglables d'orientation du flux d'air.

Le carénage 37 est en outre équipé d'un moyen de commande 40 afin que les passagers à l'arrière puissent commander le système de climatisation 24.

Le carénage 37 peut être en une matière plastique et formé en par exemple deux parties ou demi-coques opposées accouplées, reliées à la structure de support 10.

Grâce à l'existence de la structure de support et à la disposition des éléments qui la compose et grâce à la disposition spécifique des éléments du système de climatisation dans le boîtier, la console centrale peut présenter un encombrement réduit, tout en présentant une résistance mécanique suffisante, apte, optionnellement, à supporter un accoudoir avant. L'existence d'un carénage permet de donner à la console une esthétique souhaitée.

La présente invention ne se limite pas aux exemples ci-dessus décrits. Bien d'autres variantes de réalisation sont possibles, sans sortir du cadre de l'invention telle que définie par les revendications.

## Revendications

1. Véhicule automobile comprenant au moins deux rangées de sièges et une console centrale située entre deux sièges de la première rangée de sièges en avant de la deuxième rangée de sièges, ladite console centrale comprenant un boîtier (25) contenant un système de climatisation capable de souffler de l'air vers l'arrière, la console (9) comprenant une structure de support (10) qui comprend une embase de fixation (11) fixée au plancher du véhicule, un support supérieur (12) situé plus haut que l'embase de fixation, une pluralité de montants (13, 14, 15, 16) formés de profilés tubulaires reliant l'embase et le support supérieur et des moyens de maintien dudit boîtier, ladite structure de support délimitant un espace de réception (26) au moins partielle dudit boîtier (25), **caractérisé en ce que**
l'embase de fixation (11) est formée par une plaque substantiellement rectangulaire présentant des trous traversants (11a) pour le passage de vis de fixation à un plancher, le support supérieur (12) étant formé par une plaque plate rectangulaire, deux montants (13 et 14) reliant les coins avant gauche et droit de l'embase de fixation (11) et du support supérieur (12) tandis que deux montants (15, 16), relient les coins avant gauche et droit de l'embase de fixation (11) et du support supérieur (12).

2. Véhicule selon la revendication 1, dans lequel lesdits montants (13, 14, 15, 16) s'étendent de façon adjacente à la périphérie dudit boîtier.

3. Véhicule selon l'une quelconque des revendications précédentes, dans lequel la structure de support comprend quatre montants (13, 14, 15, 16) situés, au moins en partie, sensiblement de façon adjacente à des coins dudit boîtier (25).

4. Véhicule selon l'une quelconque des revendications précédentes, dans lequel la structure de support comprend des pièces de renforcement (23) reliant lesdits montants, au moins deux à deux.

5. Véhicule selon l'une quelconque des revendications précédentes, dans lequel la structure de support comprend des pattes de fixation (27) dudit boîtier.

6. Véhicule selon l'une quelconque des revendications précédentes, dans lequel la console comprend un carénage (37) dans lequel s'étendent au moins en partie ladite structure de support (10) et ledit boîtier (25).

7. Véhicule selon l'une quelconque des revendications précédentes, dans lequel l'embase de fixation (11) présente un passage (36) traversé par un appendice inférieur (35) dudit boîtier (25).

8. Véhicule selon l'une quelconque des revendications précédentes, dans lequel la console porte un accoudoir (18) monté sur ledit support supérieur (12).

9. Véhicule selon la revendication 8, dans lequel ledit accoudoir est monté sur le support supérieur par l'intermédiaire de moyens d'articulation (20) présentant des butées de fin de course (21).

10. Véhicule selon l'une quelconque des revendications précédentes, dans lequel le boîtier (25) contient un système de ventilation (31) et un échangeur de chaleur (30), disposés sensiblement verticalement l'un au-dessus de l'autre.

## Patentansprüche

1. Kraftfahrzeug, umfassend mindestens zwei Sitzreihen und eine Mittelkonsole, die sich zwischen zwei Sitzen der ersten Sitzreihe und vor der zweiten Sitzreihe befindet, wobei die Mittelkonsole ein Gehäuse (25) umfasst, das ein Klimatisierungssystem beinhaltet, das imstande ist, Luft nach hinten zu blasen, wobei die Konsole (9) eine tragende Struktur (10) umfasst, die eine am Boden des Fahrzeugs befestigte Befestigungsbasis (11), einen oberen Träger (12), der sich höher als die Befestigungsbasis befindet, eine Vielzahl von aus rohrförmigen Profilen gebildeten Pfosten (13, 14, 15, 16), welche die Basis und den oberen Träger verbinden, und Haltemittel des Gehäuses umfasst, wobei die tragende Struktur einen Raum (26) für die mindestens teilweise Aufnahme des Gehäuses (25) begrenzt, **dadurch gekennzeichnet, dass** die Befestigungsbasis (11) von einer im Wesentlichen rechteckigen Platte gebildet ist, die Durchgangslöcher (11a) für den Durchgang von Befestigungsschrauben an einem Boden aufweist, wobei der obere Träger (12) von einer rechteckigen flachen Platte gebildet ist, wobei zwei Pfosten (13 und 14) die vordere linke und rechte Ecke der Befestigungsbasis (11) und des oberen Trägers (12) verbinden, wohingegen zwei Pfosten (15, 16) die vordere linke und rechte Ecke der Befestigungsbasis (11) und des oberen Trägers (12) verbinden.

2. Fahrzeug nach Anspruch 1, wobei sich die Pfosten (13, 14, 15, 16) benachbart zum Umfang des Gehäuses erstrecken.

3. Fahrzeug nach einem der vorangehenden Ansprüche, wobei die tragende Struktur vier Pfosten (13, 14, 15, 16) umfasst, die sich mindestens teilweise etwa benachbart zu Ecken des Gehäuses (25) befinden.

4. Fahrzeug nach einem der vorangehenden Ansprüche, wobei die tragende Struktur Verstärkungsteile (23) umfasst, welche die Pfosten mindestens paarweise verbinden.

5. Fahrzeug nach einem der vorangehenden Ansprüche, wobei die tragende Struktur Befestigungslaschen (27) des Gehäuses umfasst.

6. Fahrzeug nach einem der vorangehenden Ansprüche, wobei die Konsole eine Verkleidung (37) umfasst, in welcher sich die tragende Struktur (10) und das Gehäuse (25) mindestens teilweise erstrecken.

7. Fahrzeug nach einem der vorangehenden Ansprüche, wobei die Befestigungsbasis (11) einen Durchgang (36) aufweist, der von einem unteren Fortsatz (35) des Gehäuses (25) durchquert wird.

8. Fahrzeug nach einem der vorangehenden Ansprüche, wobei die Konsole eine Armlehne (18) trägt, die auf dem oberen Träger (12) angebracht ist.

9. Fahrzeug nach Anspruch 8, wobei die Armlehne mithilfe von Gelenkmitteln (20), die Endlagenanschläge (21) aufweisen, auf dem oberen Träger angebracht ist.

10. Fahrzeug nach einem der vorangehenden Ansprüche, wobei das Gehäuse (25) ein Belüftungssystem (31) und einen Wärmetauscher (30) enthält, die etwa vertikal übereinander angeordnet sind.

## Claims

1. Motor vehicle which comprises at least two rows of seats and a central console which is located between two seats of the first row of seats in front of the second row of seats, the said central console comprising a casing (25) which contains an air conditioning system which is capable of blowing air toward the rear, the console (9) comprising a support structure (10) which comprises a fixing base (11) which is fixed to the floor of the vehicle, an upper support (12) which is located higher than the fixing base, a plurality of pillars (13, 14, 15, 16) formed by tubular profile-members which connect the base and the upper support and means for retaining the said casing, the said support structure delimiting a space (26) for at least partially receiving the said casing (25), **characterized in that** the fixing base (11) is formed by a substantially rectangular plate having through-holes (11a) for the passage of fixing screws for fixing to a floor, the upper support (12) being formed by a rectangular planar plate, two pillars (13 and 14) connecting the left and right front corners of the fixing base (11) and of the upper support (12) while two pillars (15, 16) connect the left and right front corners of the fixing base (11) and of the upper support (12).

2. Vehicle according to Claim 1, wherein the said pillars (13, 14, 15, 16) extend in a manner adjacent to the periphery of the said casing.

3. Vehicle according to either of the preceding claims, wherein the support structure comprises four pillars (13, 14, 15, 16) which are at least partially located substantially adjacent to corners of the said casing (25) .

4. Vehicle according to any one of the preceding claims, wherein the support structure comprises reinforcement components (23) which connect the said pillars, at least in pairs.

5. Vehicle according to any one of the preceding claims, wherein the support structure comprises lugs (27) for fixing the said casing.

6. Vehicle according to any one of the preceding claims, wherein the console comprises a fairing (37) in which the said support structure (10) and the said casing (25) extend at least partially.

7. Vehicle according to any one of the preceding claims, wherein the fixing base (11) has a passage (36) through which a lower extension piece (35) of the said casing (25) extends.

8. Vehicle according to any one of the preceding claims, wherein the console carries an armrest (18) which is mounted on the said upper support (12).

9. Vehicle according to Claim 8, wherein the said armrest is mounted on the upper support via articulation means (20) which have travel limit stops (21) .

10. Vehicle according to any one of the preceding claims, wherein the casing (25) contains a ventilation system (31) and a heat exchanger (30) which are arranged substantially vertically one above the other.
